# DEMANDE DE BREVET EUROPEEN

(11) **EP 4 625 662 A1**
(43) Date de publication de la demande: **01.10.2025**
(21) Numéro de dépôt: 25160797.4
(22) Date de dépôt: 28.02.2025
(51) Int. Cl.: H01M 50/308, H01M 50/342, H01M 50/367, H01M 50/383, H01M 50/392, H01M 50/30

(54) **DISPOSITIF DE VENTILATION AVEC MEDIA PERMEABLE METALLIQUE POUR BOÎTIER DE BATTERIE(S), ET PROCEDE D ASSEMBLAGE**

(30) Priorité: 26.03.2024 FR 2403047
(71) Demandeur: Purflux Filtration, 78280 Guyancourt (FR)
(72) Inventeur: BONNE, Samuel, 14350 SOULEUVRE EN BOCAGE (FR)
(74) Mandataire: Plasseraud IP

(57) **Abrégé**

Le dispositif (1) de ventilation pour boîtier de batterie inclut un corps (2) de montage formant ou associé à une bordure d'ouverture du boîtier, un canal (C2) dans le corps, optionnellement une membrane (5) perméable obturant le canal, et un capot (3). Le canal guide un échappement gazeux provenant de l'intérieur du boîtier. Un média filtrant métallique (8 ; 108), typiquement à couche flexible fibreuse ou sous forme de textile, assure une protection anti-feu en se plaçant sous le corps (2) à l'opposé du capot, le média (8) incluant une toile ou couche flexible (ML) de fils ou fibres métalliques pour filtrer les gaz et séparer les particules solides. En obturant le canal (C2) par le dessous, le média (8) forme une barrière, thermiquement résistante, pour ne laisser passer dans le canal qu'un écoulement fluide épuré, sans particules solides, notamment lorsque la température de l'échappement gazeux dépasse 500°C.

## Description

### Domaine technique

La présente divulgation relève du domaine des systèmes de batterie, notamment des équipements de ventilation permettant une compensation de pression pour batterie. L'invention concerne plus particulièrement un dispositif, se montant sur le boîtier d'une batterie/alimentation électrique, qui permet une compensation de pression en disposant d'une protection sous forme de média filtrant métallique et un procédé d'assemblage d'un tel dispositif.

### Arrière-plan technologique

On connaît, par le document US 11245156, un dispositif de compensation de pression, qui inclut une base ajourée, un couvercle et une membrane poreuse placée sous la base pour laisser passer les gaz enfermés dans un module de batterie, par exemple un module de batterie équipant un véhicule. En cas d'instabilité (pression interne trop élevée), la membrane prévue sous le couvercle se soulève à un tel niveau qu'une pointe prévue sur la base du dispositif de compensation perce la membrane, ce qui permet au gaz de sortir avec un débit plus significatif. De nombreuses ouvertures sont prévues dans le couvercle pour l'échappement d'air à un débit significatif. Un écran protecteur, sous forme de grille rigide, est placé sous la membrane en étant fixé par des vis d'ancrage du dispositif.

Un tel dispositif, utilisant un emboîtement à clips, ne permet pas une éjection du couvercle en cas de rupture/perçage de la membrane. Dans ce cas, le couvercle en plastique et la base en plastique chauffent très vite. Il a été constaté que les températures peuvent atteindre des valeurs élevées, dépassant largement 500°C, par exemple vers 900 ou 1000°C. A ce niveau de chaleur, même les plastiques agréés pour les dispositifs de ventilation des boîtiers de batteries fondent rapidement, ce qui peut créer des décollements ou désagrégation des parties qui vont boucher tout ou partie des ouvertures formées par la grille rigide (bouchage très rapide et conséquent de cette grille sous-jacente). En pratique, avec des particules incandescentes, fines particules métalliques fondues et/ou des matières combustibles qui sortent du boîtier au travers de la grille, des flammes peuvent se former et l'incendie est susceptible de se propager dans le véhicule.

Il existe donc un besoin pour des dispositifs de ventilation de conception simple, prévenant la propagation de feu en cas d'emballement thermique, et utilisables efficacement pour la compensation de pression des batteries.

### Résumé

La présente divulgation vient améliorer la situation.

A cet effet, il est proposé un dispositif de ventilation pour boîtier de batterie, en particulier pour boîtier comprenant une ou plusieurs batteries, le dispositif comprenant :
- un corps, par exemple formant un connecteur;
- un canal, prévu dans le corps pour guider un écoulement gazeux s'échappant du boîtier par l'ouverture (typiquement suivant un axe longitudinal du canal) ;
- une partie d'obturation, solidarisée au corps, de préférence réalisée sous forme d'un capot qui est ajouré en pouvant recouvrir le canal sur un côté opposé à l'ouverture ; et
- un média filtrant métallique de protection anti-feu porté par ou recouvrant le corps dans une disposition sous-jacente au corps à l'opposé de la partie d'obturation, le média filtrant métallique incluant une toile ou couche (typiquement flexible) de fils ou fibres métalliques perméable aux gaz et obturant le canal par le dessous, ce grâce à quoi le média filtrant métallique forme une barrière (à effet barrière aux particules solides) pour ne laisser passer qu'un écoulement fluide épuré sans particules solides dans le canal, en particulier en cas d'échappement, hors du boîtier, d'un flux gazeux dont la température est très élevée, par exemple en dépassant 500°C (avec possiblement le média qui a une structure comprenant de l'acier ou essentiellement réalisée en acier, par exemple un acier résistant au moins à des températures de 600°C).

Grâce à ces dispositions, une protection anti-feu efficace peut être avantageusement réalisée en obtenant un effet barrière vis-à-vis de particules incandescentes susceptibles - en cas de défaut de recouvrement du canal, d'être propulsées directement de l'intérieur du boîtier vers l'extérieur.
De plus, contrairement à des structures de grille (avec des ouvertures de l'ordre de 1 ou 2 mm en largeur, arrêtant seulement 25 à 35% des particules), on s'assure de stopper toutes les particules solides.

Le média filtrant métallique peut présenter une perméabilité élevée au flux gazeux (perméabilité relative aux gaz), par exemple en incluant une superposition de fibres ou filaments métalliques très fins, par exemple de taille submillimétrique pour le diamètre (ou paramètre caractéristique équivalent au diamètre). Le ou les médias métalliques peuvent avoir des fibres de diamètre proche du millimètre, en particulier pour tenir les hautes températures (jusqu'à 1 mm de diamètre de fils).

Le média filtrant métallique constitue une couche (homogène ou se décomposant éventuellement en sous-couches) qui est flexible ou apte à présenter un profil ondulé. Plus généralement, le média filtrant métallique est composé, à au moins 95% en masse, de fils et/ou fibres de métal, le métal étant de préférence un acier. Des interstices entre les fils ou fibres peuvent former des pores de taille submillimétrique, par exemple pouvant dépasser 100 microns, ou éventuellement excéder 1 mm dans certains cas.
La toile ou couche, qui forme des pores au sein du média filtrant métallique flexible, présente une ou plusieurs parties pliées ou incurvées pour recouvrir l'ouverture du boîtier, la toile ou couche flexible pouvant préférentiellement présenter un profil ondulé. Des parties/organes de soutien, en particulier du côté opposé au corps, peuvent être prévues pour le maintien du profil ondulé.

Selon une particularité, le corps a un axe central formant l'axe longitudinal du canal et est axialement interposé entre un cadre structurel et la partie d'obturation. Le cadre structurel peut définir un support, distinct du corps, pour maintenir le média filtrant métallique pincé ou plaqué en sandwich entre le cadre structurel et le corps.
Dans des options de réalisation, le cadre structurel inclut une grille dont les ouvertures ont par exemple une plus petite dimension au moins égale à 2 ou 3 mm, par exemple avec de ouvertures atteignant ou dépassant les 10 mm (voire 30 mm, au moins pour la plus grande dimension). La grille est en chevauchement par rapport au média filtrant métallique (pour un recouvrement axial).

Le corps est typiquement pourvu d'une paroi latérale et se raccorde sur l'ouverture du boîtier. Des passages axiaux peuvent être communs/alignés dans l'ensemble formé par le corps, la partie filtrante avec le média filtrant métallique et la partie à grille qui peut s'étendre sous le média filtrant métallique (côté boîtier). Lorsqu'une membrane perméable aux gaz est prévue dans le dispositif, celle-ci peut être portée (directement ou indirectement) par le corps en obturant le canal, la membrane pouvant constituer une partie de filtration apte à retenir des poussières.

Le corps peut être à base d'un matériau rigide, éventuellement en plastique, qui est dépourvu de portion radiale ou obturante, à l'éventuelles exception de fines cloisons. Plus généralement, le corps est pourvu d'une paroi latérale entourant la zone de circulation de gaz et est configuré pour se raccorder, de façon amovible ou permanente, sur le boîtier au niveau de/sur l'ouverture du boîtier. Le corps peut éventuellement être conçu comme une projection annulaire d'un composant de boîtier, ou former un élément de connexion rapporté.

Le média filtrant métallique peut présenter une ou plusieurs des particularités suivantes :
- le média présente des pores du média dont une taille, par exemple une taille caractéristique est inférieure ou égale à 0,5 ou 1 mm, de préférences avec des pores de diamètre moyen submillimétrique.
- le média filtrant comporte ou consiste en une structure métallique formant des pores distribuées dans trois dimensions.
- la toile ou couche flexible comporte au moins une couche d'un matériau métallique fibreux, non tissé.
- le média filtrant comporte ou est un non tissé (par exemple à base d'un matériau métallique qui est de préférence homogène).
- le média filtrant comporte ou est un feutre, par exemple un feutre fritté en fibre métallique.
- le média filtrant comporte ou consiste en une structure métallique ayant une porosité supérieure à 70 %, par exemple supérieure à 80 ou 85%.
- du feutre de fibre métallique, par exemple en acier inoxydable, peut présenter une épaisseur supérieure ou égale à 0,6 mm, éventuellement au moins égale à 3 ou 4 mm.
- un matériau thermiquement isolant, perméable aux gaz, peut être superposé à la toile ou couche flexible du média filtrant métallique, par exemple en se situant entre cette toile ou couche et une face du corps où se situe l'entrée du canal (canal d'évacuation de gaz).

Le média filtrant peut aussi être en acier inoxydable tissé, par exemple en ayant une épaisseur supérieure ou égale à 0,6 mm, éventuellement en dépassant 2 ou 3 mm.

Le média filtrant peut être accolé à une grille appartenant à une pièce qui forme un cadre entourant quatre côtés. Typiquement, plus de 85 ou 90% d'une face du média filtrant est disponible (pour l'impact de particules solides notamment et l'amélioration de la perméabilité de la structure filtrante formée en amont de l'entrée du canal), qu'une grille soit présente ou non en position sous-jacente au média filtrant métallique.

Le canal peut être subdivisé en différents conduits délimités au niveau d'une même ouverture du boîtier, possiblement avec deux ou plusieurs membranes pour répartir les bordures de fixation de ces membranes. Une structure avec deux canaux parallèles couverts chacun par une membrane (une membrane d'obturation par canal) peut être utilisée, sous un même couvercle/capot. Dans tous ces cas, le dispositif peut prévoir un organe de filtration incluant le média filtrant, en vis-à-vis de/recouvrant par l'intérieur chaque conduit du canal.

Selon une particularité, le dispositif peut inclure une membrane perméable aux gaz, portée par le corps en obturant le canal à l'opposé du média filtrant métallique. Cette membrane constitue une partie de filtration. La membrane, si elle est présente, peut être solidarisée au support de connexion formé par le corps, typiquement par le dessus correspondant à un côté opposé au média filtrant métallique. La membrane peut être maintenue espacée du média filtrant métallique et/ou de la plaque ou grille de protection par des cloisons prévues dans le canal.
La membrane est flexible et à partie fragile pour ne plus obturer le canal dans un état perforé ou éclaté de la membrane obtenu en cas de surpression dans le canal au-delà d'un seuil de surpression.

Une pièce plastique peut former le capot (et ainsi la portion d'obturation). Le corps peut s'insérer partiellement dans un volume intérieur du capot délimité par la jupe, ou alternativement entourer une jupe du capot.
Dans des formes de réalisation, La partie d'obturation fait partie d'un capot apte à être éjecté ou déplacé plus loin du canal pour libérer un passage permettant l'échappement massif d'un flux gazeux en cas d'emballement thermique.

Le corps permet un emboîtement élastique du capot, de sorte que le corps peut retenir axialement le capot, par exemple par des reliefs ou ergots formés sur une face externe du corps (corps annulaire), par au moins un relief intérieur (par exemple lorsque le corps ne porte pas de membrane) et/ou par des pattes formant des bords de prise ou des gorges pour l'engagement de reliefs appartenant à/portés par la jupe du capot, dans une configuration de protection de chaque membrane.
Dans des réalisations du dispositif, le capot est moulé en une seule pièce de matière plastique, de préférence sans partie élastiquement déformable/flexible dans la partie d'obturation.

Dans des réalisations, le média filtrant métallique qui peut définir une face inférieure du dispositif de ventilation, peut être maintenu en amont du canal pour former la zone d'impact des particules de combustible et plus généralement des particules solides les plus grosses (particules qui peuvent être incandescentes) rejetées depuis l'intérieur du boîtier et susceptibles de faire brûler des parties d'un véhicule (même avec un capot/couvercle restant présent, si elles devaient dégrader rapidement ce capot et le traverser pour ensuite générer des flammes). Le média filtrant métallique forme une partie stable qui permet de grandement perturber/retarder, voire stopper l'enchaînement dramatique d'un emballement thermique puis du feu qui se propage, ce qui est constaté dans des cas avec éjection ou fusion du capot sans plus aucune protection pare-feu.

Le corps peut former un support de connexion pour le capot et peut intégrer une plaque ajourée de protection rigide métallique, ou plaque à grille métallique (par exemple en acier inoxydable), cette grille ayant des ouvertures de taille dépassant typiquement 5 ou 6 mm (par exemple en largeur ou diamètre).

Typiquement, le support de connexion correspond à une première partie préassemblée, incluant le corps, l'éventuelle membrane, le média filtrant métallique et optionnellement la plaque ajourée ou grille (métallique) sous-jacente au corps, tandis que le capot correspond à une deuxième partie préassemblée. La deuxième partie se monte sur la première partie et reste attachée à cette première partie, la fixation étant permanente ou résultant d'un encliquetage résistant aux variations de pression dans le canal, sous la membrane.

La membrane peut éclater sous l'effet de l'accumulation de pression dans le canal, ce qui n'est pas le cas du boîtier et du support de connexion (avec le corps) monté sur le boîtier, sachant que le flux gazeux peut s'échapper massivement (à très haut débit par exemple) du boîtier via le canal. Le capot peut rester en place en offrant une section globale de passage importante, les voies de passage pouvant inclure des orifices axiaux de passage décalés par rapport au canal et en chevauchement (en regard) d'une zone ou région périphérique annulaire de fixation.
Une région périphérique annulaire de fixation peut, optionnellement, être formée dans le support de connexion en s'étendant autour d'un axe central du corps. Cette région de fixation s'étend autour du canal et est par exemple radialement interposée entre un joint annulaire réalisant l'étanchéité contre le boîtier et une paroi de délimitation du canal qui peut être formée intérieurement dans le corps.

Dans des options de réalisation, le corps présente une paroi de base ou flasque de montage et comporte une paroi annulaire de délimitation du canal, qui est une paroi s'étendant longitudinalement, depuis une face inférieure de la base ou flasque de montage, jusqu'à un bord supérieur où peut se poser (et typiquement se fixer) une membrane.
Le corps et/ou une plaque de protection rigide métallique peut/peuvent constituer une partie de connexion qui porte un élément d'étanchéité annulaire, de préférence logé dans une gorge intérieure de la paroi de base ou flasque. La gorge intérieure peut déboucher axialement à l'opposé de la portion d'obturation (portion d'obturation prévue dans le capot), afin de réaliser une étanchéité annulaire avec le boîtier.

Le corps, par exemple pourvu de cloisons séparatrices, peut être optionnellement réalisé d'une seule pièce. Le corps présente une face supérieure/distale du joint, qui peut être un joint de contact avec le boîtier. Dans des réalisations, La face supérieure présente une région de surface annulaire, sensiblement plane, sur laquelle une membrane est fixée ou contre laquelle une bordure de cette membrane est pincée.
La paroi latérale annulaire du corps, servant à former la circonférence du canal, peut s'étendre longitudinalement autour d'un axe central entre le flasque qui permet un ancrage sur le boîtier, en disposant typiquement d'une surface inférieure sensiblement plane et perpendiculaire à l'axe central, et un bord annulaire axialement distal de l'ouverture du boîtier. Le bord annulaire peut être formé dans une projection axiale qui fait saillie depuis un épaulement annulaire extérieur du flasque. Le flasque est constitué par exemple d'une pièce plastique rigide constitutive du corps, en pouvant s'interposer axialement entre une plaque ou grille, métallique, disposée le long de la surface inférieure du flasque, et l'éventuelle membrane qui est posée sur le bord annulaire. On comprend que le média filtrant métallique peut être accolé à la plaque ou grille qui soutient ce média et/ou inclut une partie qui entoure la périphérie de ce média.

Dans des réalisations permettant au média filtrant métallique d'être disposé parallèlement à une membrane, une ou plusieurs des particularités suivantes sont prévues :
- le dispositif de ventilation comporte, en regard du canal, un organe perceur, porté par l'un parmi la partie d'obturation et le corps, pour perforer ou éclater la membrane en cas de surpression dans le canal au-delà d'un seuil de surpression.
- l'organe perceur s'étend suivant une direction axiale définie par une tige de l'organe perceur, de telle sorte qu'un axe longitudinal de la tige passe à l'intérieur d'un périmètre délimité par un bord externe du média métallique.
- l'organe perceur peut faire partie d'un groupe d'organes perceurs portés par la partie de capot.

- un ou plusieurs organes perceurs peuvent être inclus dans la pièce plastique constitutive du capot.
- l'organe perceur peut être porté par une portion radiale du corps disposée en regard du canal.
- des vis ou organes d'ancrage, en matériau métallique, assurent le maintien du média filtrant métallique et éventuellement de la plaque de protection accolée (ou solidarisée) au média filtrant, en plaquant le média métallique contre le boîtier, par exemple dans une zone entourée par le joint du dispositif de ventilation.

Avec ces dispositions, il est permis de réaliser un agencement compact, au niveau d'une ouverture de boîtier, avec une membrane protégée des salissures par un capot pour une gestion du mode de ventilation habituel, tout en disposant d'une sécurité dans un mode d'urgence avec échappement gazeux massif, en s'assurant de percer la membrane et d'éviter de faire fondre des parties plastiques dont le capot est constitué, ce qui prévient ou retarde la création de flammes.

Le dispositif, équipé d'au moins une membrane, permet à la fois une compensation de pression d'un boîtier de batterie et une ventilation d'urgence, typiquement en protégeant la membrane poreuse aux gaz pour son fonctionnement de compensation. Une conception préassemblée, sans mobilité du capot verrouillé, permet au dispositif de pouvoir obturer efficacement l'ouverture du boîtier (et conserver l'intégrité de chaque membrane), dans un environnement soumis à des vibrations. C'est le cas notamment lorsque le boîtier de batterie est monté dans un véhicule motorisé, par exemple une automobile ou autre engin roulant.
Dans des options de réalisation, la membrane (au moins une membrane) est conçue pour garantir l'étanchéité à l'huile, à l'eau et à la poussière. Elle peut être en matériau hydrophobe et/ou former une barrière à l'eau.

Selon un aspect, il est proposé un procédé d'assemblage d'un dispositif de ventilation qui a un effet pare-feu tout en minimisant les risques de création de bouchon dans la zone par laquelle un flux gazeux doit s'échapper en urgence (risque de retombée de matériau plastique fondu constitutif de la portion d'obturation par exemple).

A cet effet il est proposé un procédé d'assemblage d'un dispositif de ventilation pour boîtier de batterie, en utilisant un média filtrant métallique apte à se monter sous un corps prévu pour équiper le boîtier de batterie, le corps délimitant un canal formant une sortie au travers d'une ouverture dudit boîtier, le procédé comprenant les étapes consistant essentiellement à :
- fournir le média filtrant métallique ; ainsi qu'un cadre de support ou élément à paroi latérale prévue pour entourer le média filtrant métallique;
- solidariser le média filtrant métallique au corps, en fixant le média filtrant dans une disposition sous-jacente au corps à l'opposé d'une sortie du canal permettant l'évacuation de gaz provenant du boîtier ;
   dans lequel la solidarisation du média filtrant permet de filtrer un flux de gaz entrant dans le canal, par une toile ou couche flexible de fils ou fibres métalliques perméable aux gaz qui constitue le ou qui fait partie du média filtrant métallique, ce grâce à quoi la toile ou couche flexible constitue, dans ledit dispositif, une protection pare-feu entre le boîtier et le canal du corps avec un effet barrière aux particules solides pour ne laisser passer qu'un écoulement fluide épuré sans particules solides dans le canal.

Il est permis d'intégrer le média filtrant métallique au plus près du débouché de l'ouverture du boîtier, avec par exemple une face de ce média qui définit une face extérieure du dispositif, apte à se placer en vis-à-vis de l'intérieur du boîtier. Le cas échéant cette face du média est en chevauchement avec une grille de support appartenant au cadre de support.

Dans ce procédé, une membrane peut être fixée sur le corps, cette membrane étant perméable aux gaz pour permettre une filtration sélective d'un flux gazeux circulant dans le canal pour quitter le boîtier de batterie. Le procédé utilise par exemple le corps, réalisé d'une seule pièce plastique, pour :
- former une première face de support pour la fixation de la membrane ; et
- former une deuxième face de support pour raccorder, directement ou indirectement, le média filtrant métallique au reste du dispositif de ventilation.
   On comprend que la première face de support et la deuxième face de support peuvent être opposées l'une à l'autre dans le dispositif de ventilation.

Un capot avec partie d'obturation peut être prévu dans le dispositif, à l'opposé du média filtrant métallique. Pour la ventilation d'urgence, des voies de passage sont prévues dans le capot et/ou sont présentes pour permettre de contourner la portion d'obturation. Typiquement, ces voies de passages peuvent être distribuées dans la partie de capot.

Dans des modes de réalisation du procédé d'assemblage, une ou plusieurs des dispositions suivantes peuvent être adoptées :
- le média filtrant métallique est fourni sous forme d'une feuille, toile ou couche flexible, dont la face inférieure/en vis-à-vis du boîtier (ouverture du boîtier) est constituée d'acier inoxydable ou métal similaire.
- le média filtrant métallique inclut une portion ou zone de protection thermique en regard d'une entrée du canal, en étant plus large que l'entrée ou avec l'un au moins parmi une correspondance de forme et une correspondance dans des dimensions de périmètre/bordure, entre le contour/bordure du débouché et le contour de la zone de protection thermique.

La membrane peut être fixée par une étape de soudage réalisée à chaud, par exemple par utilisation d'une énergie vibratoire, optionnellement de façon à faire fondre un ou plusieurs reliefs annulaires formés sur le corps. Une portion annulaire avec de tels reliefs peut ainsi être fondue lors de l'étape de soudage. Le cas échéant, la soudure peut être faite par ultrasons, par exemple avec cordon en relief sur la pièce plastique et une sonotrode plane, ou sur une surface plastique plane et cordon en relief sur la sonotrode.
La membrane peut être fixe dans une zone de soudure annulaire et déformable dans la portion obturante (perméable au gaz) entourée par cette zone de soudure.

Selon une particularité, le capot présente une jupe ou une portion tubulaire apte à loger intérieurement (donc entourer) une projection ou portion d'insertion qui appartient au corps. Le corps peut par exemple présenter une projection creuse, annulaire ou à paroi latérale annulaire. Un support de montage/connexion peut être formé par le corps, qui est par exemple réalisé une pièce et optionnellement prévu pour recouvrir axialement une grille métallique de protection.
Une fixation du corps sur le boîtier est permise par des organes d'attache (boulons, vis ou autres pièces adaptées pour permettre une connexion rigide), par exemple en disposant tout ou partie des organes d'attache dans une région entourée par un joint de contact avec le boîtier. Lorsque des trous sont prévus dans la partie de capot, l'un au moins/plusieurs des organes d'attache sont disposés à l'aplomb d'un trou correspondant de la partie de capot. Les organes d'attache sont métalliques et retiennent une plaque de protection ou un cadre, qui entoure typiquement le média filtrant.
Eventuellement, le dispositif forme une unité de ventilation préassemblée qui ne recouvre pas encore l'ouverture du boîtier de batterie. On obtient ainsi un dispositif formant un composant fonctionnel préassemblé, qui peut se monter par vissage, quart de tour, ou autre opération simple de montage sur la région du boîtier formant l'ouverture (large ouverture par rapport aux ouvertures étroites obturées par les clapets) du boîtier. Une fixation simple de ce type peut permettre d'obtenir l'étanchéité grâce à un joint rapporté sur la base/embase du dispositif, tandis que le capot ou partie de protection analogue reste dans sa configuration d'obturation non étanche, pleinement emboîté sur le corps constituant un support de connexion. Le dispositif peut donc être transporté, conditionné et livré de façon robuste, avec un capot, et permet de limiter le nombre d'étape(s) de mise en place du dispositif sur le boîtier de batterie. Le capot/couvercle peut être échancré ou pourvu d'ouvertures axiales pour la mise en place des organes d'attache pour la connexion au boîtier alors que le capot est déjà solidarisé au corps.

### Brève description des dessins

D'autres caractéristiques, détails et avantages apparaîtront à la lecture de la description détaillée ci-après, et à l'analyse des dessins annexés, sur lesquels :
la figure 1 est une vue en perspective éclatée d'une unité de ventilation apte à se monter directement sur une paroi d'un boîtier de batterie, afin d'obturer une ouverture de cette paroi.
la figure 2 illustre, par une perspective, la moitié d'un dispositif de ventilation ayant un montage similaire à celui de l'unité de la figure 1 en utilisant une membrane et un média filtrant métallique d'obturant, de part et d'autre, un canal de dégazage.
la figure 3 est une vue de dessous d'un dispositif de ventilation, montrant la position, sous-jacente au canal d'évacuation de gaz et entourée par un joint, du média filtrant métallique qui procure un effet pare-feu.
la figure 4 est une vue en coupe longitudinale d'un dispositif de ventilation, suivant une option avec un corps vissé sur la boîtier par des vis venant en prise avec un élément structurel à partie filtrante incluant un média métallique.
la figure 5 montre un exemple de montage de l'unité de ventilation sur une face externe d'une paroi du boîtier de batterie.
la figure 6 montre, par une vue en coupe, un détail d'une variante utilisant un média métallique ondulé monté entre deux parties de support.

### Description des modes de réalisation

Il est exposé ci-après, de façon détaillée, plusieurs exemples de modes de réalisation non limitatifs. Sur les différentes figures, des références identiques indiquent des éléments identiques ou similaires.

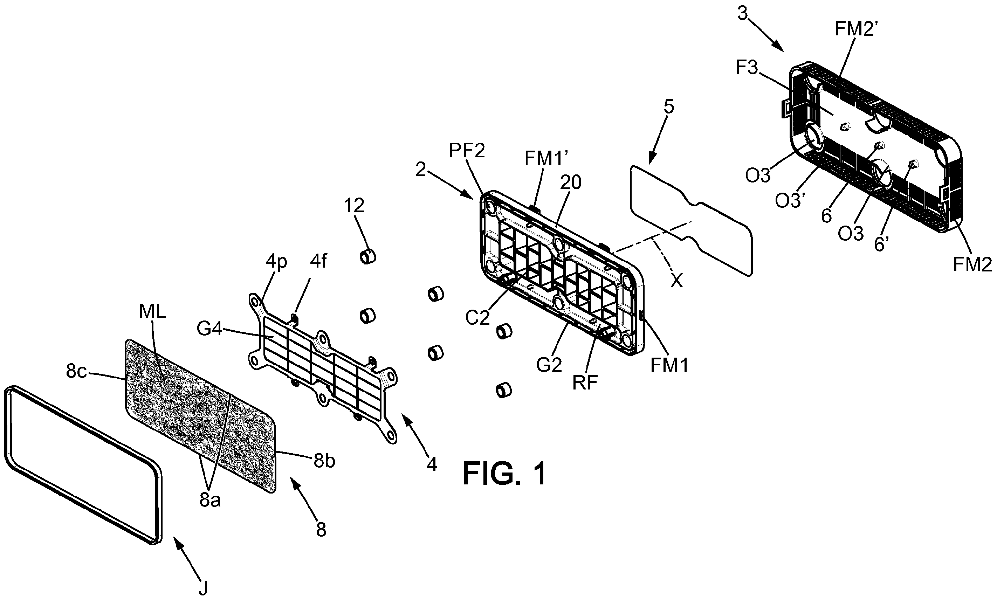

En référence aux figures 1, 2, 4 et 5, il est montré une unité de ventilation/compensation de pression pouvant être livrée comme une unité préassemblée, prête à obturer une ouverture O d'un boîtier de batterie en se montant typiquement du côté d'une face externe d'une coque ou plaque du boîtier P. Dans ce qui suit, cette unité (possiblement préassemblée) est appelée dispositif 1 de ventilation. Dans des options préférées, le dispositif 1 présente une partie de montage (formant support de capot/couvercle) incluant ou consistant en un corps 2 permettant une connexion au boîtier, en étant pourvu de moyens de fixation PF2, par exemple formés comme une bride annulaire ou comme des pattes d'insertion/retenue pour le maintien en position sur le boîtier de batterie. Les moyens de fixation PF2 peuvent être prévus dans une base du corps 2, qui recouvre le boîtier P ou qui est optionnellement insérable (en partie) à l'intérieur du boîtier de batterie. L'élément ou corps 2 peut se composer essentiellement d'un connecteur rigide, en matériau plastique, optionnellement pourvu d'un joint J monté ou rapporté sur ce connecteur. Le corps 2 peut avoir éventuellement une configuration aplatie, avec une épaisseur (correspondant à une hauteur) qui est par exemple au moins quatre ou cinq fois inférieure à une largeur ou diamètre externe. Le corps 2 peut être prévu d'une seule pièce en matériau plastique, non-renforcé ou renforcé (par exemple par des fibres de verre, fibres de carbone ou similaire) ou matériau moulé similaire.

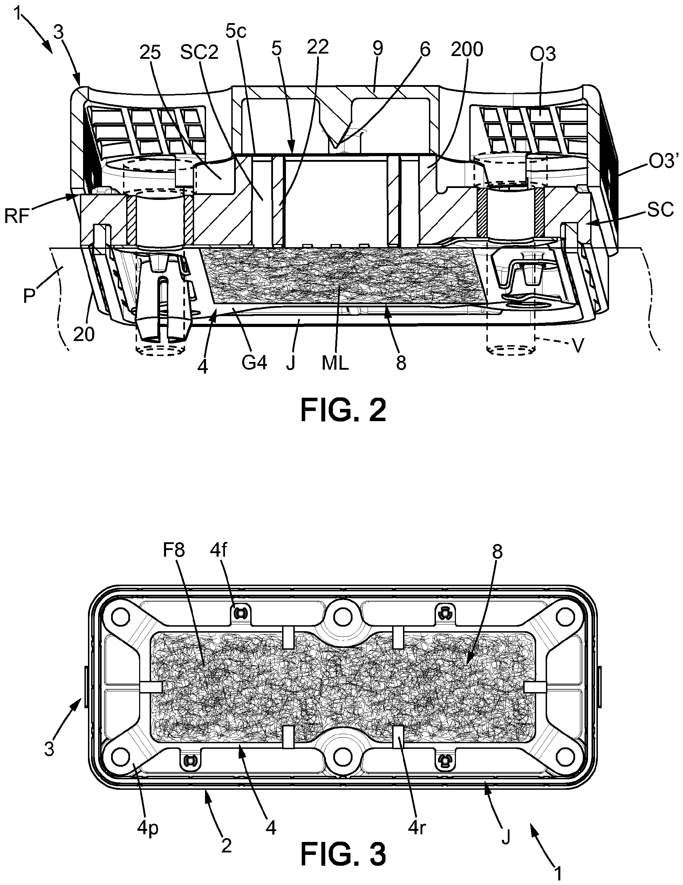

Le corps 2, de structure creuse et ouvert à deux extrémités axiales opposées, peut disposer d'une membrane 5 flexible et poreuse/perméable au gaz, qui permet un effet de compensation de pression. La membrane 5 s'étend transversalement par rapport à un axe longitudinal, typiquement un axe central X du corps 2. La membrane 5 peut se gonfler vers l'extérieur en cas de légère suppression et peut même être percée si la surpression présente un risque, en dépassant un seuil de surpression. Dans des réalisations, comme dans le cas de la figure 2 par exemple, la membrane 5 n'est pas exposée/ visible depuis l'extérieur, grâce à un capot 3 du dispositif 1 qui se monte sur le corps, par des clips ou par tout mode de fixation adapté permettant de fixer rigidement le capot 3.

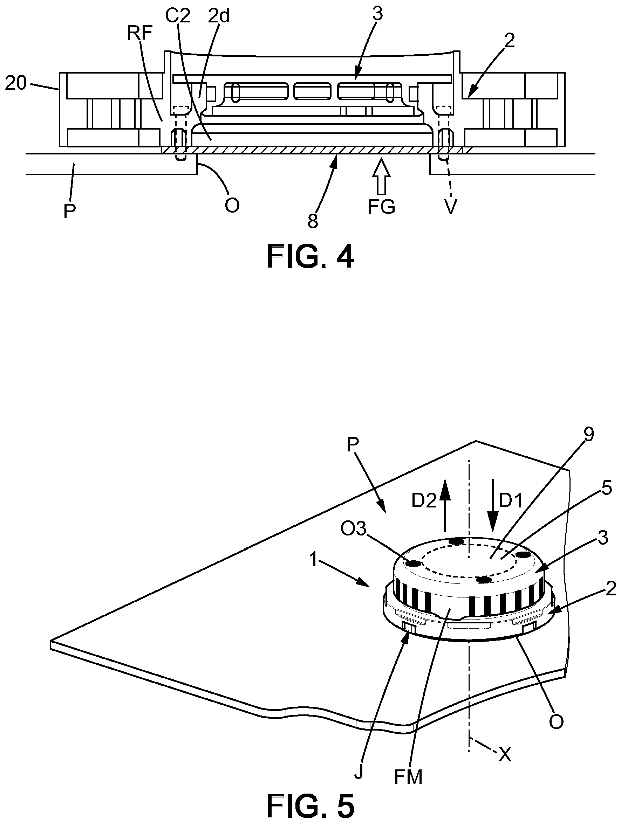

Les figures 2 et 4 montrent un montage de capot 3 pour lequel une seule partie filtrante plate pare-feu, incluant le média filtrant métallique 8 (formé par exemple d'un bloc) est agencée en vis-à-vis de l'intérieur du canal C2 pour un effet de séparation entière/complète des particules solides, même dans des conditions de chaleur avec un flux gazeux dépassant 500 ou 600°C, ce qui est compatible avec :
- une ventilation en mode normal, dans les deux sens D1 (entrant) et sortant (D2) suivant la direction de l'axe central X, avec le média 8 sous-jacent au corps 2,
- et une ventilation d'urgence dans le sens D2, après libération de l'extrémité d'évacuation du corps 2 du fait de la dégradation/éclatement de la membrane 5, qui s'avère efficace sans dégradation de l'effet pare-feu (impact des particules combustibles sur une zone de protection correspondant à une face intérieure F8 tournée/orientée à l'opposé du canal C2, sans impact donc sur le corps 2 qui est formé en plastique).

Le capot 3 présente une partie d'obturation 9, qui peut être visible de l'extérieur, formée dans une pièce en polymère résultant d'un moulage (à base d'un matériau thermoplastique) ou matériau plastique adapté. La partie d'obturation 9, non ajourée, peut être plus petite que la section de passage formée par le canal C2.

Comme bien visible notamment sur les figures 1, 2 et 4, le corps 2 peut disposer d'une paroi latérale 20, d'une extrémité inférieure formant une base ouverte, de sorte que le corps 2 délimite un canal C2 qui débouche par une extrémité supérieure du corps 2 qui est une extrémité d'évacuation, pouvant être obturée par une membrane 5. Ici les termes « inférieure » et « supérieure » ne préjugent pas de la disposition finale montée du dispositif de ventilation mais facilitent l'exposé fait en référence à certaines des figures. Le canal C2 s'étend longitudinalement entre l'extrémité de base et l'extrémité d'évacuation, typiquement autour d'un axe central X du corps 2 qui est un axe pouvant traverser/passer par l'ouverture O à l'état monté du dispositif 1 de ventilation, comme illustré par exemple sur la figure 5. La paroi latérale 20 peut être une paroi latérale extérieure du corps 2 qui inclut optionnellement un conduit ou élément de conduite 200, comme visible sur la figure 2.

Une gorge inférieure G2 (figure 1) prévu dans le corps 2 permet de loger le joint J ou élément d'étanchéité, par exemple sous forme d'anneau, de façon radialement espacée de l'élément de conduite délimitant la voie ou canal C2 pour la circulation de gaz.
Plus généralement, la paroi latérale 20 peut porter un joint J en l'écartant de l'élément de conduite/canal C2. Le joint J peut ainsi être espacé/éloigné d'une zone d'évacuation de gaz très chauds dans des situations de surchauffe ou d'emballement thermique.

Le canal C2 est décalé et espacé intérieurement par rapport à la région de fixation RF pour l'attache du capot 3 et pour la fixation étanche au boîtier P. Lorsqu'une membrane 5 est prévue, celle-ci fait partie d'un ensemble préassemblé. Cet ensemble peut se composer de la plaque ajourée 4, de la partie filtrante incluant/constituée par le média filtrant métallique 8, et du support de connexion SC et de la membrane 5.
Une portion annulaire 5c de la membrane 5 peut être fixée de façon étanche à une extrémité de l'élément de conduite formé par le corps 2. Bien entendu, la fixation de la membrane 5, au niveau d'une portion annulaire 5c peut aussi s'effectuer sur une autre surface du corps ou par pincement réalisé dans l'ensemble préassemblé, dans des variantes de réalisation. Un support intermédiaire peut aussi être ajouté pour constituer un support de membrane.

Sur les figures 1, 2 et 4, on peut voir que le corps 2 peut présenter une portion radiale annulaire qui inclut ou forme le fond de la gorge G2 orientée vers le boîtier P en permettant de recevoir le joint J annulaire. Le joint J peut éventuellement présenter (avant compression axiale obtenue par l'ancrage/fixation) une hauteur typiquement plus grande que la profondeur de la gorge G2 ou tout du moins est dimensionné pour dépasser/déborder axialement à l'extérieur de cette gorge G2. Plus généralement, le joint J peut faire saillie vers le bas (ici vers le boîtier) en présentant ainsi une surface qui s'étend hors de la gorge G2 et apte à s'appuyer axialement contre le boîtier de batterie. Les faces annulaires de délimitation de la gorge G peuvent présenter, chacune, des nervures ou reliefs saillants de retenue du joint J annulaire. Ces reliefs ou nervures, distribuées de façon espacée suivant la direction circonférentielle, font saillie radialement vers l'intérieur de la gorge G2.

Le corps 2 peut présenter une projection 25 ou 2d, en saillie axialement depuis la portion radiale annulaire qui permet de former la région de fixation RF. Comme montré notamment aux figure 2 et 4, cette projection 25, 2d (tubulaire, rectangulaire ou cylindrique) peut prolonger axialement la base du corps 2 de façon que l'élément de conduite s'étende depuis la base jusqu'à un bord formé par la projection 25, 2d. Ainsi, une face interne de l'élément de conduite 200 peut être formée avec une extension axiale supérieure à l'extension axiale de la base ou s'étend la région de fixation RF annulaire. Plus généralement, le dispositif 1 forme typiquement au moins un canal C2, de préférence délimité par une circonférence de l'élément de conduite 200 qui peut faire saillie d'un côté d'évacuation par rapport au reste du corps 2. Le canal C2 peut servir aussi bien à une amenée d'air qu'à une évacuation d'air, lorsque l'extrémité d'évacuation du corps 2 est obturé par une membrane 5 perméable.
Dans certaines variantes, par exemple utilisant au moins un clapet anti-retour, il peut être prévu que le canal C2 serve uniquement à l'évacuation d'air.

Le canal C2 du corps peut se présenter sous différentes formes avec, dans certains cas, la possibilité de former différentes voies d'évacuation en aval de l'ouverture O. Dans les cas illustrés, le canal C2 est délimité par l'élément de conduite 200 et/ou une partie du corps 2, afin de guider un écoulement gazeux FG s'échappant du boîtier P par l'ouverture O (l'écoulement sortant par l'ouverture passant en totalité par le canal C2). Dans le cas non limitatif des figures 1 et 2, il est montré un canal C2 subdivisé en sous-canaux SC2 en raison de la présence d'entretoises ou cloisons 22 séparatrices qui peuvent quadriller le canal et permettre de distribuer le flux/écoulement gazeux FG.
La configuration avec des entretoises ou traverses/cloisons, réparties à plusieurs niveaux ou allongées suivant la direction de l'axe central X, peut limiter la propagation et l'ampleur de flammes qui pourraient se former avec l'évacuation subite de particules combustibles près de l'ouverture O du boîtier (où de l'oxygène est présent en abondance), en cas de surpression avec emballement thermique dans le boîtier P.

### Exemple de réalisation d'un matériau flexible de fibres métalliques

Le média filtrant 8, 108 peut avantageusement combiner une résistance thermique et une porosité importante, par exemple supérieure à 80 ou 85%. Les fils ou fibres métalliques sont par exemple tissés (avec une maille très fine), en ayant éventuellement plusieurs couches superposées de fibres métalliques parallèles. Alternativement, les fils ou fibres sont rassemblées dans une couche de non tissé. Dans certaines variantes, de la fibre frittée peut être utilisée. A titre d'exemple non limitatif, le média filtrant 8, 108 contient ou est en filaments métalliques très fins (1.5 à 80 µm) posés uniformément pour former une structure non tissée tridimensionnelle frittée aux points de contact. Le média filtrant 8, 108 peut faire partie d'un composant ou élément filtrant préassemblé.

Dans certaines options, une construction multicouche peut être prévue avec chaque couche composée de fibres de diamètre potentiellement différent pour obtenir des performances optimales, par exemple, la perte de charge, l'efficacité de filtration, la capacité de charge des particules et la résistance du support. Dans ce cas, le matériau multicouche peut avoir une conception graduée, de sorte que la capacité de rétention des particules solides est beaucoup plus élevée et, par conséquent, la durée de vie est plus longue. Plus largement quelle que soit la structure choisie pour former la porosité ou les interstices dans la couche de fibres ou filaments métalliques (une porosité supérieure à 70%, par exemple atteignant ou dépassant 80%, est préférée), l'agencement de ces fibres ou filaments est choisi pour permettre le passage de gaz à des débits élevés, tout en interceptant les particules solides.

Le média 8, 108 peut être optionnellement obtenu à partir de plusieurs couches de fibres/filaments déposées les unes sur les autres, ou d'une bande ou toile de fibres métalliques qui est soumise à un pliage. Un traitement mécanique peut être réalisé pour ajuster la densité. Par exemple, dans une application, la bande ou toile est tournée et/ou repliée pour obtenir un jeu/écartement de l'ordre 10 % entre les couches adjacentes. Une couture, le recours à un métier à aiguilles ou tout dispositif adapté pour la tenue mécanique de la couche flexible ML peut être utilisé.

Quel que soit le processus de fabrication adopté, la toile ou couche métallique ML peut constituer une partie flexible, formée en une pièce homogène perméable aux gaz qui est :
- retenue entre le corps 2 et le boîtier P, typiquement en utilisant une plaque 4 ajourée formant un cadre de support 4,
- ou alternativement intégrée dans un composant hétérogène qui inclut un cadre ou des parties périphériques de fixation et la toile ou couche métallique ML constitutive de tout ou partie du média filtrant métallique 8, 108.
   Le cas échéant, le média filtrant métallique 8, 108 peut être 4 réalisé sous forme de toile souple ou couche de feutre directement collée à un support, éventuellement en s'étendant plus à l'extérieur, par rapport à l'ouverture O, que ce support.
   En pratique, le collage peut être réalisé en périphérie d'une région de passage des gaz. Le collage peut éventuellement être complémentaire d'une retenue axiale par des pattes ou organes de fixation 4r. La figure 3 montre le cas, nullement limitatif, d'organe de fixation 4r qui s'étendent radialement vers l'intérieur, depuis la bordure d'un cadre d'un cadre ou plaque 4 de soutien, permettant de maintenir le média filtrant métallique 8. La plaque 4 possède aussi des pattes radiales, externes, pour le raccordement au corps 2 (par exemple pour une fixation via les vis V). Dans ce cas, la face F8 d'impact (pour les particules solides sortant du boîtier) du média filtrant métallique est disponible/non recouverte par le dessous, à l'exception de fines ou courtes portions de soutien (voir organes/pattes 4r dans le cas de la figure 3). Typiquement, plus de 85 ou 90% de la face F8 est disponible, qu'une grille G4 soit présente ou non en position sous-jacente au média 8, 108.

Dans le cas non limitatif de la figure 1, une fixation et un maintien du média filtrant métallique 8 est permis pas une coopération de forme entre la partie de grille G4 d'une plaque 4 ajourée et le périmètre du média 8, par exemple délimité par deux côté longs 8a parallèles, une extrémité 8b possiblement rectiligne et une autre extrémité 8c possiblement rectiligne. Un format rectangulaire du média 8 peut être prévu.

Plus généralement, on comprend que le média filtrant métallique 8, 108 peut former une paroi d'obturation non traversée par des parties de fixation. Un cadre et/ou les parties de fixation servent à prévenir/empêcher une mobilité du média 8, 108. Dans l'exemple de la figure 1 il est prévu que la plaque 4 soit très ajourée dans une partie centrale recouverte par le média filtrant métallique 8, tout en disposant d'une partie de marge qui inclut des organes de fixation. Ici, la plaque 4 dispose par exemple de pattes de fixation 4p ou autres parties de montage qui peuvent être alignées avec les moyens de fixation PF2 formés dans le corps 2. Lorsque des vis V ou organes d'ancrage similaires sont prévu(e)s pour traverser cette plaque 4 et une bride ou région de fixation RF annulaire du corps 2, on peut optionnellement utiliser, dans des orifices/conduits de montage pouvant constituer les moyens de fixation PF2, des anneaux fendus ou organes métalliques qui constituent des limiteurs de compression 12, afin de former une interface de contact avec les surfaces plastiques constituées par exemple par le boîtier (paroi P) et le corps 2.

La grille ou plaque de protection 4 est par exemple formée d'une seule pièce, avec une forme plane/aplatie (donc plus mince que le corps 2). La combinaison de cette plaque 4 et du média filtrant métallique 8 permet de réaliser un pare-feu (effet limiteur et même inhibiteur de flammes, en empêchant la propagation de particules combustibles et de flammes par l'ouverture O). Des pattes ou organes de fixation 4f (visibles en figure 1) sont par exemple formés dans la bordure périphérique de la plaque de protection 4, afin de maintenir celle-ci accolée contre l'extrémité de base du corps 2, en coopérant avec des organes de fixation complémentaires prévus dans la région de fixation RF, par exemple sous forme de clips en saillie axialement depuis une face de dessous du corps en regard du boîtier P à l'état monté. Plus largement, on comprend que la plaque de protection 4 peut être une pièce qui est fixée au corps 2, en recouvrant directement le canal C2 du côté opposé au capot 3.

La bordure périphérique de la plaque de protection 4 est surmontée par la région de fixation RF prévue dans une bride annulaire du corps 2, qui s'étend autour de l'élément de conduite 200. La bordure de la partie de grille G4 peut suivre le bord de l'entrée du canal C2, en recouvrant axialement ce bord (donc en couvrant la totalité du périmètre de l'entrée du canal C2). La bordure de la plaque 4 peut être une bordure continue, de forme rectangulaire ou annuaire par exemple. Le cas avec une grille ou plaque de protection 4, par exemple en matériau métallique, interposée entre le boîtier P et le corps 2 (prévu en plastique ou matériau moulé similaire), n'est qu'une option pour permettre de guider et maintenir le média filtrant métallique 8.

Le dispositif de ventilation 1 assemblé est muni de son joint J, afin d'obturer l'ouverture O en s'assurant que les échanges gazeux soient réalisés avec une filtration par le média filtrant métallique 8, 108 puis éventuellement par un nombre adapté de membranes. Dans l'exemple non limitatif des figures 1-2 et 5, on comprend que le joint J peut s'appuyer sur une zone annulaire de siège prévue sur le boîtier, autour de l'ouverture O, typiquement sans pénétrer intérieurement dans le boîtier. Ce joint J peut être un joint annulaire, par exemple en matériau élastomère, venant axialement en contact avec le boîtier P, sur une face externe de ce dernier.

### Fixation du capot sur le corps

La fixation du capot 3 sur le corps 2 (qui inclut les moyens de fixation FM1, FM1') peut s'effectuer par déformation plastique des moyens complémentaires de fixation FM2, FM2' ou FM prévus dans le capot 3 typiquement réalisé en une pièce de matériau plastique. Des pattes axialement saillantes FM2, FM peuvent former au moins une partie des moyens/organes complémentaires de fixation. Plus largement, un emboîtement élastique peut être prévu avec un recours à des butées axiales, permettant éventuellement un effet anti-retrait du couvercle.

Dans le cas non limitatif de la figure 1, les moyens complémentaires de fixation FM2, FM2' ou FM, par un effet de rappel élastique dans leur forme initiale, empêchent le retrait du capot 3, de sorte que ce dernier reste fixé au corps 2, quelle que soit la montée en température dans le canal C2. Cela qui signifie que, si le média filtrant 8, 108 n'était pas présent, le capot 3 ne se détacherait pas mais risquerait d'être cassé et fondu près de sa partie d'obturation 9 avec le risque d'obturer alors des voies d'évacuation, avant que la zone de fixation (plus éloignée du canal C2) ne soit à son tour dégradée/cassée si l'emballement thermique perdure. La configuration prévue ici, avec des voies de passage O3, O3' multiples et le bouclier correspondant au média, permet de favoriser l'échappement gazeux massif sans perte de charge, et avec des échappements via le capot 3 (ou autour du capot 3) qui facilitent le refroidissement et minimisent le risque de déformation/altération à la chaleur. Ceci évite concrètement qu'un état de surpression perdure avec la surchauffe associée. Dans des options, le capot 3 peut s'éjecter ou se décaler du corps 2.

Le couvercle 3 peut être fixe par rapport au corps 2, en l'absence de ressort axial ou quelconque pièce autorisant un degré de liberté en translation ou rotation. Dans les options illustrées, un effet anti-rotation est aussi procuré par l'action des ergots de clips FM1, FM1', typiquement engagés au travers de fenêtres ou évidements du capot 3. Plus généralement, le capot 3 qui forme la partie d'obturation 9 peut être directement en prise sur des reliefs du corps 2, ce qui permet en pratique d'empêcher un retrait accidentel du couvercle 3, par exemple en cas d'à-coup lorsque le boîtier P est embarqué dans un véhicule motorisé.
Plus largement, on comprend que la formation d'une barrière pare-feu, par le média filtrant métallique 8, le long d'une extrémité du corps qui n'est pas en contact avec le capot 3 et qui est axialement opposée au capot 3, permet une grande flexibilité dans la conception et le montage d'un tel capot/couvercle.

### Exemple de fonction de perçage intégrée au couvercle

En référence aux figures 1 et 2, il est prévu sur le couvercle 3 un ou plusieurs organes perceurs 6, 6', orienté(s) vers une ou plusieurs zones de la membrane 5 qui sont chacune éloignées de la portion annulaire 5c de fixation. Dans le cas non limitatif de la figure 1, le capot 3 inclut, en regard du canal C2, au moins un premier organe perceur 6 central. De plus, la partie d'obturation 9 peut intégrer un ou au moins deux organes perceurs 6' décalés suivant la direction d'allongement du capot 3, ce dernier pouvant présenter un format généralement rectangulaire ou non circulaire.
Chaque organe perceur 6, 6' est rigide et pourvue d'une pointe ou extrémité adaptée pour déchirer/percer la membrane 5 en vis-vis, qui se gonfle en saillie au-dessus de l'extrémité d'évacuation du corps 2.

Que l'organe perceur 6, 6' soit réalisé sous forme de relief saillant de la partie de capot 9 ou conçu comme une quelconque structure pointue ou coupante structure portée par le couvercle 3, on comprend que cet organe perceur 6, 6' permet de perforer ou éclater la membrane 5 en cas de surpression dans le canal C2, typiquement au-delà d'un seuil de surpression pour lequel un emballement thermique est très probable ou avéré.
Un ou plusieurs organes perceurs peuvent s'étendre parallèlement les uns aux autres, en étant chacun inclus dans une même pièce plastique constituant un composant rigide du couvercle 3.

Dans le capot 3, des voies de passage O3, O3' peuvent être distribuées dans des zones du capot 3, autour de l'organe perceur 6, 6', pour faciliter l'échappement de gaz tout en conservant la configuration initiale (et typiquement l'intégrité initiale) du dispositif 1.
Le corps 2 peut réaliser un guidage unidirectionnel du flux ou écoulement gazeux FG sortant par l'ouverture O, avec le cas échéant les cloisons 22 qui participent à un effet de guidage linéaire. Une déviation de flux peut être réalisée par le capot 3, et des passages O3' peuvent déboucher latéralement vers l'extérieur par la périphérie du capot 3.

### Option(s) avec média métallique ondulé

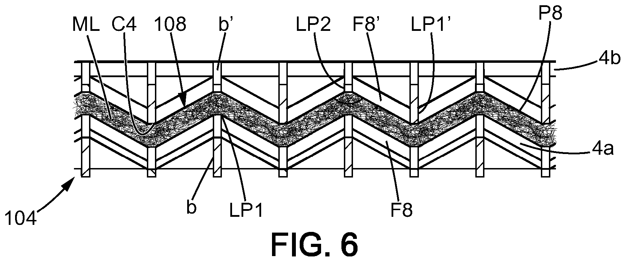

Le média filtrant métallique 108, comme dans le cas de la figure 6 par exemple, peut inclure une couche flexible ML ondulée tout en s'installant le long de l'ouverture O, sous le corps 2 pour former l'effet barrière aux particules solides en amont du canal C2 suivant le sens d'évacuation de gaz. Les deux faces opposées F8, F8' de la toile ou couche flexible ML, peuvent être parallèles en suivant le même profil ondulé. Une paroi ondulée P8, continue pour éviter des interruptions dans la couche ML, est ainsi formée en permettant un effet pare-feu. La conception en fils ou fibres souples peut permettre d'obtenir une telle conformation à profil ondulé. Un soutien ou renforcement peut être prévu localement, par exemple avec des contacts C4 ou liaisons au niveau des plis, afin de rendre cette conformation stable, éventuellement rigide au moins localement. Le périmètre du média filtrant métallique 108 peut être défini au niveau d'un bord, éventuellement rectangulaire, qui est reçu ou maintenu dans un cadre rigide.

Lorsqu'un profil ondulé est prévu pour le média métallique 108, la couche flexible ML peut être est reliée à une ou deux parties de support 4a, 4b, typiquement rigides, qui sont par exemple rendues solidaires du corps 2, en pouvant être fixées à un cadre externe servant à définir un bord B4 de façon équivalente au cas avec une grille plate ou plaque ajourée de support 4. Au moins le support 4a situé à l'opposé peut être métallique, éventuellement similaire à une plaque ajourée 4 (se fixant éventuellement comme dans le cas de la figure 4), mais avec des barreaux b, b' parallèles de deux sortes disposés en alternance pour réaliser les contacts C4 ou liaisons par le dessous de la couche ML, au niveau des lignes de plis (les barreaux b étant en appui sur les zones rectilignes de fond LP1 dans la face F8).
Les faces F8, F8', pourvues de lignes LP1, LP1' ou zones rectilignes de fond dans le profil ondulé, sont par exemple soutenues dans une conformation prédéfinie (ici avec ledit profil ondulé) par la ou les partie(s) de support 4a, 4b incluant chacune une pluralité d'organes de soutien solidarisés à la couche flexible ML le long des lignes LP1 et/ou LP1' qui correspondent à des zones rectilignes de fond. Les arêtes sortantes ou lignes LP2 peuvent être aussi en contact avec des barreaux b' d'une partie de support correspondant 4a, 4b.

Dans la structure de support, il peut être prévu des barreaux b, b' espacés et parallèles entre eux, de préférence rigides, formant au moins les organes de soutien dans la partie de support 4a, 4b. Ces éléments structurels permettent de maintenir et structurer la conformation à profil ondulé de la toile ou couche ML, Les barreaux b, b' peuvent être sélectivement reliés aux faces F8, F8' respectives, chacun par une face latérale de barreau, de préférence le long d'une ligne de pliage réalisée dans un matériau constitutif de la couche ou toile. Autrement dit, le soutien peut être externalisé par rapport à la couche ML. Par exemple, comme visible en figure 6, les faces F8, F8' sont associées chacune à une structure à barreaux formant une partie respective de support 4a, 4b, de sorte qu'il est prévu dans chaque structure à barreaux :
- un premier type de barreaux, pour lequel chaque barreau b est accolé et lié à une ligne LP1, LP1' de fond de la face extérieure (F8 ou F8') correspondante ; et
- un deuxième type de barreaux, pour lequel chaque barreau b' est accolé et lié à une ligne LP2 en saillie de la face extérieure (F8 ou F8') correspondante.

En référence à la figure 6, les organes de soutien peuvent consister en des barreaux b, b' qui ont de préférence une même longueur pour définir une longueur identique de fixation sur la couche flexible ML à laquelle ils sont attachés. Comme dans certains cas sans ondulations, les fibres ou fils métalliques de la couche flexible ML peuvent être distribuées en trois dimensions entre les deux faces F8 et F8', par exemple en formant un non tissé. Alternativement, une toile ou couche tissée peut être préparée avec une ou deux parties de support permettant le maintien d'une conformation ondulée, pour obtenir la paroi ondulée P8.

### Exemples d'assemblage

Le corps 2 peut supporter directement la totalité des autres éléments du dispositif 1, à savoir le joint J, la plaque de protection 4 (ou partie similaire ajourée/à grille G4) qui peut emboîtée élastiquement ou fixée rigidement sous le corps 2 contre sa base, le média filtrant métallique 8 et le capot 3 qui présente la portion d'obturation 9. La membrane 5 optionnelle peut être soudée ou rapportée avec un contact annulaire étanche, la partie de protection ajourée, typiquement sous forme de couvercle 3, en entourant l'ouverture O de la paroi du boîtier P de batterie.

Les vis V ou organes d'attache permettent au corps 2 de se monter dans ou autour l'ouverture O, contre le boîtier P, en délimitant le canal C2, formé à l'aplomb de l'ouverture O ou plus généralement en suivant la direction longitudinale du corps 2 (suivant l'axe central). A l'état monté, le capot 3 est maintenu espacé de la paroi P par la base du corps 2.
Le média filtrant métallique 8, 108 peut être fourni dans un composant ou élément filtrant qui inclut un cadre de support métallique permettant de former une périphérie typiquement non perméable aux gaz, autour du média filtrant métallique 8, 108. Le cadre de support peut former une paroi latérale entourant le média filtrant métallique 8, 108, sans écartement laissant passer du gaz entre ce cadre et un bord ou périphérie externe du média 8, 108.

Qu'il soit monté sur un tel cadre, plaque 4 ou élément de support similaire, ou non, le média filtrant métallique 8, 108 est rendu solidaire du corps 2, en fixant ce média filtrant métallique 8, 108 dans une disposition sous-jacente au corps 2 à l'opposé de la sortie du canal permettant l'évacuation de gaz provenant du boîtier, et donc à l'opposé du capot 3.

Comme bien visible sur les figues 1 et 6A, un épaulement peut être prévu dans le corps 2, au niveau de la région de fixation RF pour permettre de réaliser des clips à la fois sur la base (moyens de fixation FM1') et en périphérie de la base du corps 2 (avec les moyens de fixation FM1 chacun en saille latéralement sur un côté du corps 2). Ceci permet de fixer le capot 3 dans une zone radialement décalée vers l'extérieur, par rapport à au média filtrant métallique et éventuellement par rapport à une zone de soudure de la membrane 5.

Le dispositif de ventilation 1 peut former un agencement compact, réactif à une situation d'urgence dans le boîtier P en limitant la perte de charge, ce qui peut avantageusement éviter des dégradations néfastes, éviter la propagation de feu, tout en assurant que les composants plastiques du dispositif sont protégés vis-à-vis des particules incandescentes et des flammes. Ainsi, un retour à l'équilibre avec refroidissement peut être obtenu sans dégradation extérieure au boîtier et cela avant que du plastique ne coule pour boucher le canal C2 ou une grille G4 interposée entre le boîtier et le canal.

Dans la variante de réalisation illustrée sur la figure 4, on observe que l'ancrage par les vis V, également métalliques, permet d'assurer une disposition plate du composant filtrant incluant le média filtrant métallique 8. Dans ce type de cas, il est aussi permis de réaliser un composant plat dont le cadre peut former la plaque 4, au travers de laquelle les vis V sont fixés, tandis que le média filtrant métallique 8 forme un pare-feu à grande perméabilité qui est solidarisé (par exemple par frittage) au cadre de la plaque 4.

La présente divulgation ne se limite pas aux modes de réalisation décrits ci-avant, seulement à titre d'exemple, mais elle englobe toutes les variantes que pourra envisager l'homme de l'art dans le cadre de la protection recherchée.

Par exemple lorsqu'une membrane 5 est prévue, il y a différentes façons de libérer le canal C2 pour permettre la circulation d'un débit gazeux plus élevé. La membrane 5 peut ainsi, dans des variantes, présenter une structure escamotable ou présenter au moins une région fragile facilitant sa rupture, par exemple sans recours à une pointe de perforation pourvu que le niveau de déformation requis pour une telle rupture soit atteint seulement en cas de dépassement d'un seuil de surpression (du côté du canal/intérieur du boitier de batterie).

Par ailleurs, l'unité ou dispositif de ventilation 1 peut prévoir la présence d'un support de membrane 6, ce support pouvant être formé séparément du corps 2. Cette conception peut simplifier la production du dispositif 1, puisque la membrane 5 n'est pas soudée directement sur le corps 2, mais sur une autre pièce constitutive du support de membrane (séparément conçu). Le processus de soudage sur le support de membrane peut être moins coûteux et plus rapide, sans complexité de l'outil de soudage par exemple. Cela peut éventuellement permettre de réaliser un corps 2 plus compact.

Enfin, l'expression boîtier de batterie doit être comprise dans un sens général, le boîtier pouvant renfermer un ou plusieurs groupes d'accumulateurs aptes à fournir une énergie sous forme électrique ou énergie exploitable sous une quelconque forme pour une conversion en énergie électrique.

La paroi du boîtier P incluant l'ouverture O peut présenter n'importe quelle orientation. Bien que l'exemple non limitatif de la figure 5 correspond à une orientation de cette plaque/paroi dans un plan généralement horizontal pour disposer d'un couvercle 3 ou partie de protection surmontant axialement (par le dessus) le corps 2 permettant la connexion du couvercle 3, de sorte que l'axe X est ici vertical, d'autres dispositions sont permises, notamment avec une unité de ventilation montée latéralement sur le boîtier de batterie.

## Revendications

1. Dispositif (1) de ventilation pour boîtier de batterie, en particulier pour boîtier comprenant une ou plusieurs batteries, le dispositif (1) comprenant :
- un corps (2) pourvu d'une paroi latérale et se raccordant sur une ouverture (O) du boîtier ;
- un canal (C2), prévu dans le corps (2) pour guider un écoulement gazeux (FG) s'échappant du boîtier par l'ouverture (O) suivant un axe longitudinal (X) du canal (C2) ;
- une partie (9) d'obturation, solidarisée au corps (2), de préférence réalisée sous forme d'un capot (3) qui est ajouré en recouvrant le canal (C2) sur un côté opposé à l'ouverture (O) ;
**caractérisé en ce que** le dispositif (1) de ventilation comprend un média filtrant métallique (8 ; 108) de protection anti-feu porté par ou recouvrant le corps (2) dans une disposition sous-jacente au corps (2) à l'opposé de la partie (9) d'obturation, le média filtrant métallique (8 ; 108) incluant une toile ou couche flexible (ML) de fils ou fibres métalliques perméable aux gaz et obturant le canal (C2) par le dessous, ce grâce à quoi le média filtrant métallique (8 ; 108) forme une barrière aux particules solides pour ne laisser passer qu'un écoulement fluide épuré sans particules solides dans le canal (C2).

2. Dispositif selon la revendication 1, dans lequel le média filtrant métallique (8 ; 108) est composé à au moins 95% en masse de fils et/ou fibres de métal, le métal étant de préférence un acier.

3. Dispositif selon la revendication 1 ou 2, dans lequel le corps (2) a un axe central formant l'axe longitudinal du canal (C2) et est axialement interposé entre un cadre structurel (4) et la partie d'obturation (9), le cadre structurel (4) définissant un support, distinct du corps (2), pour maintenir le média filtrant métallique (8 ; 108) pincé ou plaqué en sandwich entre le cadre structurel (4) et le corps (2).

4. Dispositif selon la revendication 3, dans lequel le cadre structurel (4) inclut une grille (G4 ; 4a, 4b) dont les ouvertures ont une plus petite dimension au moins égale à 2 ou 3 mm, la grille (G4 ; 4a, 4b) étant en chevauchement par rapport au média filtrant métallique (8 ; 108).

5. Dispositif selon l'une quelconque des revendications précédentes, comprenant en outre une membrane (5) perméable aux gaz, portée par le corps (2) en obturant le canal (C2) à l'opposé du média filtrant métallique (8 ; 108), la membrane (5) constituant une partie de filtration, la membrane (5) étant flexible et à partie fragile pour ne plus obturer le canal (C2) dans un état perforé ou éclaté de la membrane (5) obtenu en cas de surpression dans le canal (C2) au-delà d'un seuil de surpression.

6. Dispositif selon la revendication 5, comprenant en regard du canal (C2) un organe perceur (6, 6'), porté par l'un parmi la partie (9) d'obturation et le corps (2), pour perforer ou éclater la membrane (5) en cas de surpression dans le canal (C2) au-delà d'un seuil de surpression.

7. Dispositif selon l'une quelconque des revendications précédentes, dans lequel la partie (9) d'obturation fait partie d'un capot (3) apte à être éjecté ou déplacé plus loin du canal (C2) pour libérer un passage permettant l'échappement massif d'un flux gazeux (FG) en cas d'emballement thermique.

8. Dispositif selon l'une quelconque des revendications précédentes, dans lequel la toile ou couche flexible (ML) comporte au moins une couche d'un matériau métallique fibreux, non tissé.

9. Dispositif selon l'une quelconque des revendications précédentes, dans lequel la toile ou couche flexible (ML) présente une ou plusieurs parties pliées ou incurvées pour recouvrir l'ouverture (O), la toile ou couche flexible (ML) ayant de préférence un profil ondulé.

10. Procédé d'assemblage d'un dispositif (1) de ventilation pour boîtier de batterie, en utilisant un média filtrant métallique (8 ; 108) apte à se monter sous un corps (2) prévu pour équiper le boîtier de batterie, le corps (2) délimitant un canal (C2) formant une sortie au travers d'une ouverture (O) dudit boîtier, le procédé comprenant les étapes suivantes :
- fournir le média filtrant métallique (8 ; 108) et un cadre de support (4 ; 104) ou élément à paroi latérale prévue pour entourer le média filtrant métallique;
- solidariser le média filtrant métallique (8 ; 108) au corps (2), en fixant le média filtrant métallique (8 ; 108) dans une disposition sous-jacente au corps (2) à l'opposé d'une sortie du canal (C2) permettant l'évacuation de gaz provenant du boîtier ;
dans lequel la solidarisation du média filtrant (8 ; 108) permet de filtrer un flux de gaz entrant dans le canal (C2), par une toile ou couche flexible (ML) de fils ou fibres métalliques perméable aux gaz qui constitue le ou qui fait partie du média filtrant métallique (8 ; 108), ce grâce à quoi la toile ou couche flexible (ML) constitue, dans ledit dispositif (1), une protection pare-feu entre le boîtier et le canal (C2) du corps (2) avec un effet barrière aux particules solides pour ne laisser passer qu'un écoulement fluide épuré sans particules solides dans le canal (C2).

11. Procédé d'assemblage selon la revendication 10, dans lequel une membrane (5) est fixée sur le corps (2), la membrane (5) étant perméable aux gaz pour permettre une filtration sélective d'un flux gazeux circulant dans le canal (C2) pour quitter le boîtier de batterie, le procédé utilisant le corps (2), réalisé d'une seule pièce plastique, pour:
- former une première face de support pour la fixation de la membrane (5) ; et
- former une deuxième face de support pour raccorder, directement ou indirectement, le média filtrant métallique (8 ; 108) au reste du dispositif (1) de ventilation ;
sachant que la première face de support et la deuxième face de support sont opposées l'une à l'autre.
